# EUROPÄISCHE PATENTSCHRIFT

(11) **EP 2 100 974 B1**
(45) Veröffentlichungstag und Bekanntmachung des Hinweises auf die Patenterteilung: **07.11.2018**
(21) Anmeldenummer: 09001886.2
(22) Anmeldetag: 11.02.2009
(51) Int. Cl.: C21C 5/46, G01K 1/12, G01K 1/14, G01K 13/12, G01K 1/00, F27D 19/00, F27D 21/00

(54) **LANZE ZUR AUFNAHME EINES SENSORS ODER PROBENNEHMERS FÜR METALLSCHMELZEN**
LANCE FOR HOLDING A SENSOR OR SAMPLER FOR METAL MELTS
LANCE DESTINÉE À LA RÉCEPTION D'UN CAPTEUR OU D'UN ÉCHANTILLONNEUR POUR BAINS DE FUSION

(30) Priorität: 11.03.2008 DE 102008013698
(43) Veröffentlichungstag der Anmeldung: 16.09.2009
(73) Patentinhaber: Heraeus Electro-Nite International N.V., 3530 Houthalen (BE)
(72) Erfinder: Knevels, Johan, 3960 Bree (BE)
(74) Vertreter: Heraeus IP

(56) Entgegenhaltungen:
- GB-A- 1 191 222

## Beschreibung

Die Erfindung betrifft eine Lanze zur Aufnahme eines Sensors oder Probennehmers für Metallschmelzen mit einem Oberteil und einem zur Anordnung an dem Sensor oder Probennehmer vorgesehenen Unterteil.

Derartige Lanzen sind beispielsweise aus DE 36 41 225 A1 oder GB 1 191 222 A bekannt. Sie dienen unter anderem im Stahlwerk zur Handhabung von Probennehmern oder Sensoren. Sie weisen im Wesentlichen metallische Rohrkonstruktionen und Kupplungsstücke auf. An ihrem einen Ende kann die Lanze einen Handgriff für die Bedienperson aufweisen, an dem anderen Ende wird das Trägerrohr des Sensors oder Probennehmers aufgesteckt. Dieses Trägerrohr ist in der Regel aus Pappe gebildet. Die Lanze enthält eine mechanische und eine elektrische Kupplung, um die elektrischen Leitungen des Probennehmers oder Sensors an weiterführende Leitungen anzuschließen. Diese leiten Messwerte oder andere Signale vom Probennehmer oder Sensor an Auswerteeinheiten weiter. Häufig ist die Lanze aus verschiedenen Teilen gebildet, um beispielsweise einen Austausch des Anschlussteils für das Trägerrohr des Sensors oder Probennehmers zu ermöglichen. Ein solcher Austausch muss im Stahlwerk sehr handhabungssicher und schnell möglich sein.

Eine weitere Lanze ist aus DE 298 05 881 U1 bekannt. Diese Lanze besteht aus zusammensteckbaren Bauteilen, die leicht voneinander gelöst werden können.

Aufgabe der vorliegenden Erfindung ist es, die bekannten Lanzen zu verbessern und eine zuverlässige und schnelle Verbindung zweier Lanzenteile bzw. einen schnellen Austausch dieser Teile zu ermöglichen.

Die Aufgabe wird erfindungsgemäß durch die Merkmale des Hauptanspruchs gelöst. Vorteilhafte Ausgestaltungen sind in den Unteransprüchen angegeben. Wesentlich ist es, dass Oberteil und Unterteil der Lanze mittels einer Steckkupplung miteinander lösbar verbunden sind, wobei die Steckkupplung zwei ineinander gesteckte Kupplungsteile aufweist, von denen ein Kupplungsteil am Oberteil und das andere Kupplungsteil am Unterteil der Lanze angeordnet ist, wobei beide Kupplungsteile in Längsrichtung der Lanze ineinander gesteckt sind, wobei eines der beiden Kupplungsteile an seinem offenen Verbindungsende eine von der Stirnseite des Kupplungsteils sich in Längsrichtung der Lanze erstreckende Öffnung oder Nut aufweist, die beabstandet von der Stirnseite einen in Umfangrichtung des Kupplungsteils ausgebildeten Fortsatz aufweist, wobei an dem anderen Kupplungsteil eine Erhebung ausgebildet ist, die in den Fortsatz eingreift und wobei eine in Längsrichtung der Lanze bewegliche Blockiervorrichtung derart an Oberteil oder Unterteil der Lanze angeordnet ist, dass ein Rastelement der Blockiervorrichtung zumindest teilweise zwischen zumindest einem Teil der Erhebung und zumindest einem Teil der sich in Längsrichtung der Lanze erstreckenden Öffnung oder Nut angeordnet ist, und wobei die Blockiervorrichtung durch Schwerkraft beweglich an der Lanze angeordnet ist und sich nach dem Verbinden des Oberteils mit dem Unterteil in Betriebsstellung der Lanze nach unten verschiebt und verhindert, dass sich die Kupplungsteile des Oberteils und des Unterteils lösen können. Eine solche Vorrichtung ermöglicht ein einfaches Lösen und Verbinden des Oberteils mit dem Unterteil, wobei beide Kupplungsteile in Axialrichtung ineinander gesteckt und dann geringfügig gegeneinander verdreht werden.

Die Blockiervorrichtung wir demgemäß mit ihrem Rastelement zwischen der Erhebung des einen Kupplungsteils und der Öffnung oder Nut des anderen Kupplungsteils angeordnet und verhindert in der normalen Betriebsstellung der Lanze, dass die Kupplungsteile sich gegeneinander so verdrehen, dass sie sich voneinander lösen können. Die normale Betriebsstellung der Lanze ist eine solche Stellung, bei der ein auf das Unterteil der Lanze aufgesteckter Probennehmer oder Sensor in eine Metallschmelze eingetaucht werden kann. Das untere Ende der Lanze befindet sich damit unterhalb des oberen Endes der Lanze.

Vorzugsweise ist die Verbindung der beiden Kupplungsteile als Bajonettverschluss ausgebildet, da ein Bajonettverschluss auch unter den relativ schwierigen und mechanisch anspruchsvollen Einsatzbedingungen der Lanze sich für einen längeren und störungsfreien Einsatz eignet. Das Oberteil kann also beispielsweise mehrfach mit dazu passenden, wechselnden und unterschiedlichen Unterteilen gekoppelt werden, so dass zum Beispiel unterschiedlichen Anschlussbedingungen verschiedener Sensoren oder Probennehmer Rechnung getragen werden kann. Die Kupplungsteile sind vorzugsweise im Wesentlichen als Hohlzylinder mit im Wesentlichen kreisförmigem Querschnitt ausgebildet, so dass die elektrischen Leitungen darin geführt werden können.

Die Blockiervorrichtung ist so an der Lanze angeordnet, dass sie durch Schwerkraft beweglich ist. Dadurch verschiebt sie sich nach dem Verbinden des Oberteils mit dem Unterteil in Betriebsstellung der Lanze nach unten und verhindert, dass sich die Kupplungsteile des Oberteils und des Unterteils gegeneinander verdrehen und lösen können. Zweckmäßigerweise ist die Blockiervorrichtung am Oberteil der Lanze angeordnet, so dass sie mehrfach verwendet werden kann, wenn ein Unterteil gegen ein neues ausgetauscht wird.

Es ist weiterhin zweckmäßig, dass das am Unterteil der Lanze angeordnete Kupplungsteil in das am Oberteil der Lanze angeordnete Kupplungsteil hineingesteckt ist. Dadurch kann das mehrfach zu verwendende Oberteil stabiler ausgebildet sein als das Unterteil. An der Steckkupplung ist zweckmäßigerweise eine elektrische Kupplung angeordnet, mit der in dem Unterteil angeordnete Signalleitungen an die weiterführenden Signalleitungen des Oberteils angekoppelt werden können.

Die Kupplungsteile weisen im Wesentlichen einen kreisförmigen Querschnitt und in ihrem Inneren einen Hohlraum auf, so dass zum einen eine leichte Herstellung gewährleistet ist und zum anderen eine einfache Funktionsfähigkeit des Verdrehmechanismus. Als Bajonettverschluss kann ein unter anderem aus der Optik, Fototechnik oder Lampentechnik gut bekannter Verschluss verwendet werden. Er kennzeichnet sich im wesentlichen dadurch aus, dass zwei rohrförmige Teile in Längsrichtung ineinander geschoben werden und dann durch ein Drehen gegeneinander um die Längsachse herum eine Verriegelung durch eine Nut und eine in die Nut eingreifende Erhebung erfolgt, so dass die beiden Teile nicht mehr ohne weiteres auseinander gezogen werden können.

Das Blockierelement kann vorzugsweise außen, aber auch innen in den Rohren angeordnet sein. Bei einer Anordnung im Inneren sind im äußeren Kupplungsteil Längsschlitze vorgesehen, durch die an dem Blockierelement angeordnete Führungselemente nach außen ragen und so eine Bewegung des Blockierelements in Achsrichtung möglich ist. Zum Lösen der beiden Kupplungsteile voneinander kann das Blockierelement hochgezogen werden. Es fällt selbstständig in die Verriegelungsposition, sobald die Lanze mit ihrem Unterteil nach unten abgesenkt wird. Wenn das Blockierelement außen angeordnet ist, ist es ohne weiteres in Längsrichtung bewegbar. In Blockierstellung bzw. Raststellung ist es nicht drehbar, damit die Kupplungsteile nicht gegeneinander drehbar sind. Das bedeutet, dass z. B. ein am Oberteil der Lanze angeordnetes Blockierelement an seiner Unterseite einen Vorsprung (ein Rastelement) aufweist, der in eine entsprechende Ausnehmung des Kupplungsteils des Unterteils der Lanze eingreift und dann zwischen dem Anschlag des Kupplungsteils des Oberteils und der Erhebung des Kupplungsteils des Unterteils angeordnet ist, so dass sich die beiden Kupplungsteile nicht voneinander lösen können. Dadurch, dass die Blockiervorrichtung gleitend in die Fixierposition fällt, ist eine automatische Fixierung gewährleistet, ohne dass die Bedienperson bewusst eingreifen und arretieren müsste.

Nachfolgend wird ein Ausführungsbeispiel der Erfindung anhand einer Zeichnung erläutert. In der Zeichnung zeigt
- Figur 1: eine Steckkupplung der Lanze im Längsschnitt (a)) und in der Seitenansicht (b)),
- Figur 2: die Kupplung nach Figur 1 im entkuppelten Zustand,
- Figur 3: die Bewegung zum Entriegeln und Lösen des Oberteils vom Unterteil und
- Figur 4: die Kupplung in der Position gemäß Figur 3, wobei auch das Kontaktstück im Querschnitt dargestellt ist (ohne Kabelanschlüsse).

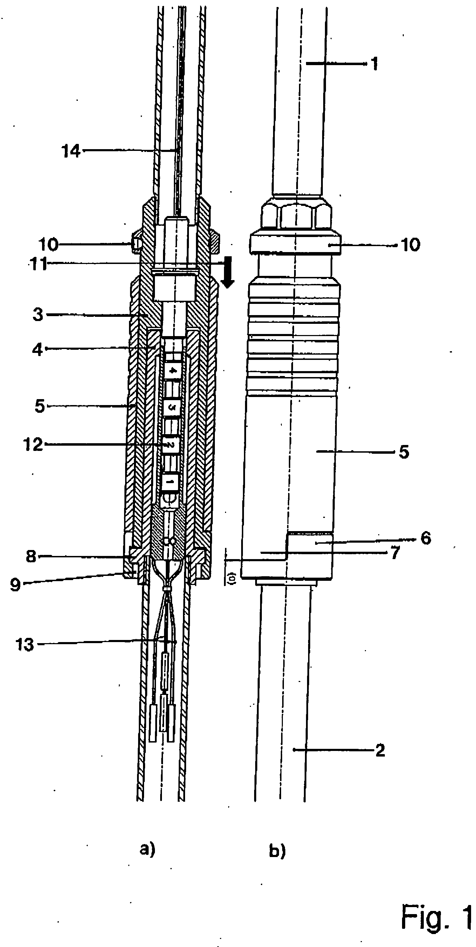

In Figur 1 ist eine Steckkupplung einer Lanze, die zum Beispiel in Stahlwerken verwendet wird, dargestellt. Die Lanze an sich ist dem Fachmann gut bekannt und deshalb nicht komplett dargestellt. Die Steckkupplung verbindet das Oberteil 1 mit dem Unterteil 2 auf einfache und sichere Weise. Dazu weist das Oberteil 1 ein Kupplungsteil 3 und das Unterteil 2 ein weiteres Kupplungsteil 4 auf. Oberteil 1 und Unterteil 2 sind, ebenso wie die entsprechenden Kupplungsteile 3;4 im Wesentlichen rohrförmig mit kreisförmigem Querschnitt ausgebildet. Die beiden Kupplungsteile 3;4 sind durch einen Bajonettverschluss miteinander verbunden. Der Bajonettverschluss wird durch eine Blockiervorrichtung 5 gesichert. Die Blockiervorrichtung 5 ist im Wesentlichen als Rohr ausgebildet, das die Aussenseite des Kupplungsteils 3 mit ausreichendem Spiel umgreift, so dass es längsbeweglich ist. Die Blockiervorrichtung 5 fällt in dem in der Zeichnung dargestellten Zustand von allein nach unten, da sie als auf dem Kupplungsteil 3 gleitbares Rohr ausgebildet ist. Sie fällt auf einen Anschlag 6, an dem sie anliegt und damit ein Lösen des Bajonettverschlusses verhindert. Dazu ist in der dargestellten Verriegelungsstellung das Rastelement 7 der Blockiervorrichtung 5 an seiner Innenseite in Umfangsrichtung zwischen der Erhebung 8 des Kupplungsteils 4 des Unterteils 2 und der Öffnung/Nut 9 des Kupplungsteils 3 des Oberteils 1 angeordnet. Dadurch ist eine Drehbewegung des Kupplungsteils 4 in der Weise, dass die Erhebung 8 sich in dem Fortsatz des Kupplungsteils 3 bis in die Öffnung/Nut 9 hineindreht, so dass beide Kupplungsteile 3; 4 voneinander getrennt werden könnten, nicht möglich. Zum Lösen der Kupplung muss die Blockiervorrichtung 5 angehoben werden. Damit sie sich nicht selbständig von dem Oberteil 1 der Lanze lösen kann, ist ein Endanschlag 10 am Kupplungsteil 3 vorgesehen, so dass die Blockiervorrichtung 5 nur zwischen dem Anschlag 6 und dem Endanschlag 10 bewegt werden kann. Der Pfeil 11 markiert die Bewegungsrichtung der Blockiervorrichtung 5 zum Arretieren.

Die Kupplung enthält schließlich eine elektrische Kupplung 12, mit der verschiedene Signalkabel 13, die mit dem Sensor verbunden sind, mit einen Kabel 14 zur Weiterleitung der Messsignale verbunden werden können. Durch die in der Schnittdarstellung angebrachten Ziffern 1 bis 4 der elektrischen Kupplung 12 sind die verschiedenen Kontaktierungsmöglichkeiten (Kontaktpunkte) angedeutet.

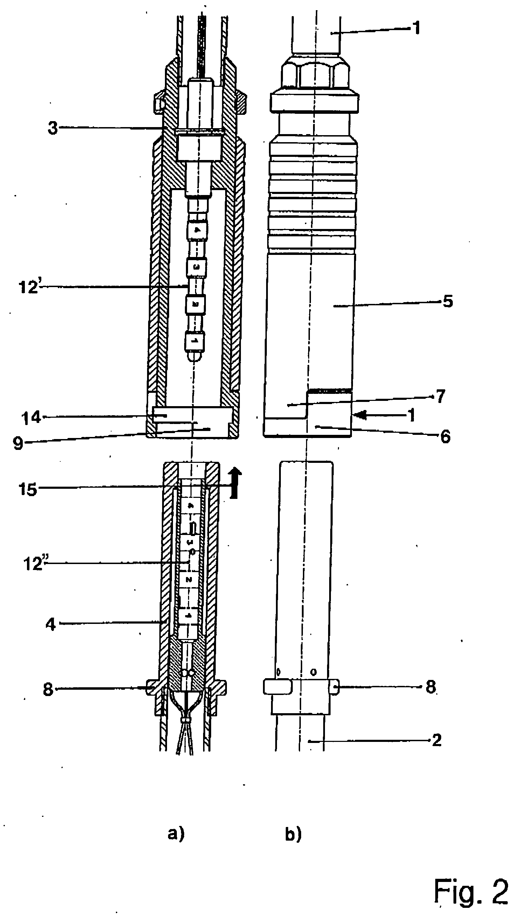

In Figur 2 ist die Kupplung im gelösten Zustand dargestellt. Hier sind zum einen die verschiedenen Kontaktpunkte 1 bis 4 am Stecker 12' der elektrischen Kupplung 12 und entsprechend an der Buchse 12" der elektrischen 12 erkennbar. In Figur 2a) ist die Öffnung/Nut 9 dargestellt, die in einen waagerechten, um die Achse der Steckkupplung umlaufenden Fortsatz 14 mündet. Beim Zusammenfügen der Kupplungsteile 3; 4 in Richtung des Pfeils 15 wird die Erhebung 8 an dem Kupplungsteil 4 des Unterteils 2 durch die Nut 9 des Kupplungsteils 3 des Oberteils 2 hindurchgeführt. Dabei drückt sie gegen einen im Inneren der Blockiervorrichtung 5 angeordneten Vorsprung des Rastelementes 7. Die Blockiervorrichtung 5 wird nach oben geschoben und gibt die Öffnung/Nut 9 sowie den Fortsatz 14 vollständig frei, so dass nach vollständigem Einschieben des Kupplungsteils 4 in das Kupplungsteil 3 beide Kupplungsteile 3; 4 gegeneinander gedreht werden können. Dabei bewegt sich die Erhebung 8 in dem Fortsatz 14 weg von der Öffnung/Nut 9. Sobald der innere Vorsprung des Rastelementes 7 nicht mehr an der Oberseite der Erhebung 8 anliegt, weil diese in Umfangsrichtung an dem Vorsprung des Rastelementes 7 vorbei bewegt wurde, fällt die Blockiervorrichtung 5 selbsttätig nach unten, wobei der im inneren angeordnete Vorsprung des Rastelementes 7 verhindert, dass die Erhebung 8 zurück zu Öffnung/Nut 9 gedreht werden kann. Die beiden Kupplungsteile 3; 4 sind in diesem Zustand nicht voneinander lösbar.

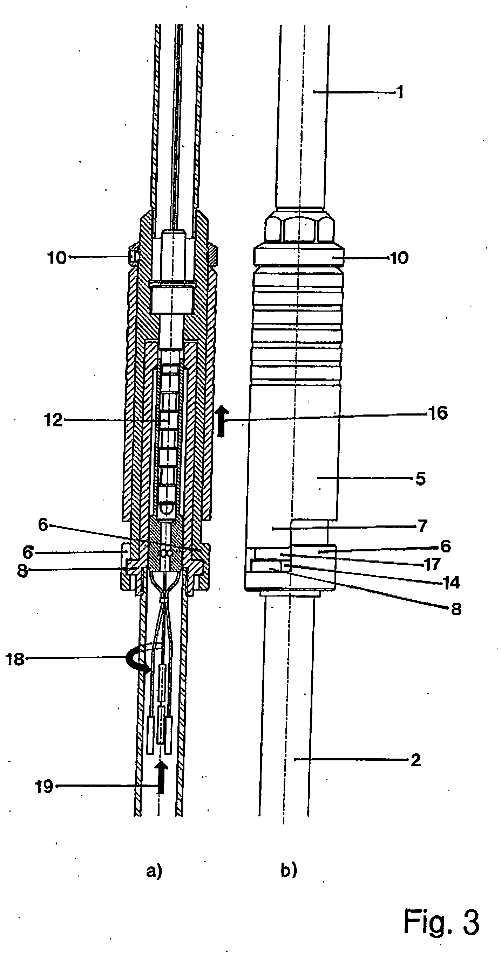

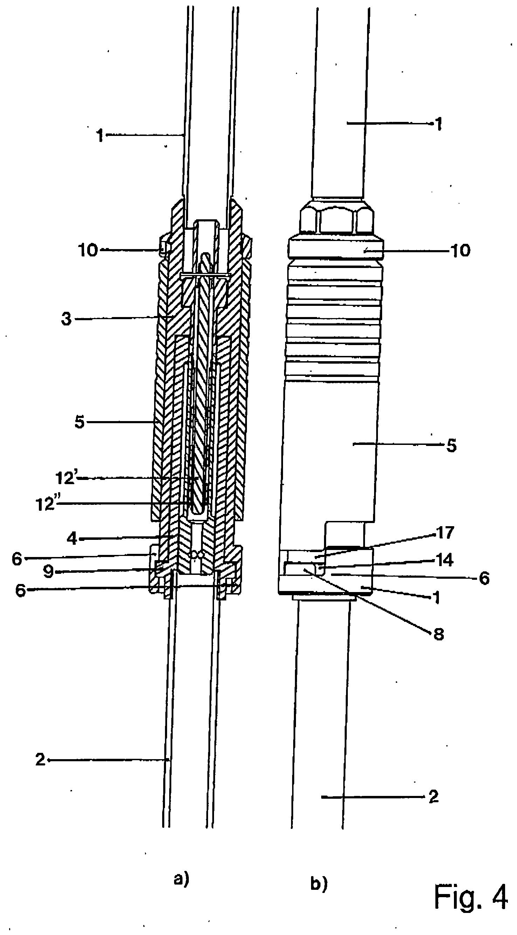

In Figur 3 ist die Stellung der Blockiervorrichtung 5 beim Endriegeln der Kupplung dargestellt. Dazu wird die Blockiervorrichtung 5 in Richtung des Pfeils 16 geschoben. Dabei wird die Bewegungsmöglichkeit der Erhebung 8 in dem Fortsatz 14 freigegeben, da das Rastelement 7 aus der Ausnehmung 17 des Oberteils 1 herausgezogen wurde. Das Unterteil 2 mit dem Kupplungsteil 4 kann in Umfangsrichtung des Pfeils 18 gedreht und entgegen der Richtung Pfeils 19 abgezogen werden, sobald die Erhebung 8 sich in der Öffnung/Nut 9 befindet. Die Darstellung in Figur 4 entspricht im Wesentlichen der Figur 3, wobei auch die elektrische Kupplung 12 mit dem Stecker 12' und der Buchse 12" im Schnitt dargestellt sind.

## Patentansprüche

1. Lanze zur Aufnahme eines Sensors oder Probennehmers für Metallschmelzen mit einem Oberteil (1) und einem zur Anordnung an dem Sensor oder Probennehmer vorgesehenen Unterteil (2), wobei dass Oberteil (1) und Unterteil (2) mittels einer Steckkupplung miteinander lösbar verbunden sind, wobei die Steckkupplung zwei ineinander gesteckte Kupplungsteile (3;4) aufweist, von denen ein Kupplungsteil (3) am Oberteil (1) und das andere Kupplungsteil (4) am Unterteil (2) der Lanze angeordnet ist, wobei beide Kupplungsteile (3;4) in Längsrichtung der Lanze ineinander gesteckt sind, wobei eines der beiden Kupplungsteile (3;4) an seinem offenen Verbindungsende eine von der Stirnseite des Kupplungsteils (3) sich in Längsrichtung der Lanze erstreckende Öffnung oder Nut (9) aufweist, die beabstandet von der Stirnseite einen in Umfangrichtung des Kupplungsteils (3) ausgebildeten Fortsatz (14) aufweist, wobei an dem anderen Kupplungsteil (4) eine Erhebung (8) ausgebildet ist, die in den Fortsatz (14) eingreift, **dadurch gekennzeichnet, dass** eine in Längsrichtung der Lanze bewegliche Blockiervorrichtung (5) derart an Oberteil (1) oder Unterteil (2) der Lanze angeordnet ist, dass ein Rastelement (7) der Blockiervorrichtung (5) zumindest teilweise zwischen zumindest einem Teil der Erhebung (8) und zumindest einem Teil der sich in Längsrichtung der Lanze erstreckenden Öffnung oder Nut (9) angeordnet ist, und wobei die Blockiervorrichtung (5) durch Schwerkraft beweglich an der Lanze angeordnet ist und sich nach dem Verbinden des Oberteils mit dem Unterteil in Betriebsstellung der Lanze nach unten verschiebt und verhindert, dass sich die Kupplungsteile des Oberteils und des Unterteils lösen können.

2. Lanze nach Anspruch 1, **dadurch gekennzeichnet, dass** die beiden ineinander gesteckten Kupplungsteile (3;4) als Bajonettverschluss ausgebildet sind.

3. Lanze nach Anspruch 1 oder 2, **dadurch gekennzeichnet, dass** die Kupplungsteile (3;4) im wesentlichen als Hohlzylinder mit im wesentlichen kreisförmigem Querschnitt ausgebildet sind.

4. Lanze nach einem der Ansprüche 1 bis 3, **dadurch gekennzeichnet, dass** die Blockiervorrichtung (5) am Oberteil (1) der Lanze angeordnet ist.

5. Lanze nach einem der Ansprüche 1 bis 4, **dadurch gekennzeichnet, dass** das am Unterteil (2) der Lanze angeordnete Kupplungsteil (4) in das am Oberteil (1) der Lanze angeordnete Kupplungsteil (3) gesteckt ist.

6. Lanze nach einem Ansprüche 1 bis 4, **dadurch gekennzeichnet, dass** in der Steckkupplung eine elektrische Kupplung (12) angeordnet ist.

## Claims

1. Lance for accommodation of a sensor or sampler for molten metals comprising a top part (1) and a bottom part (2) designed to be arranged on the sensor or sampler, whereby top part (1) and bottom part (2) are detachably connected to each other by means of a plug-in coupling, whereby the plug-in coupling comprises two coupling parts (3; 4) that are plugged into each other, of which one coupling part (3) is arranged on the top part (1) and the other coupling part (4) is arranged on the bottom part (2) of the lance, whereby both coupling parts (3; 4) are plugged into each other in the longitudinal direction of the lance, whereby one of the two coupling parts (3; 4) comprises, on its open connecting end, an opening or a groove (9) that extends from the front face of the coupling part (3) in longitudinal direction of the lance, and comprises an extension (14) that is situated at a distance from the front face and is provided in the circumferential direction of the coupling part (3), whereby an elevation (8) is provided on the other coupling part (4) and engages the extension (14), **characterised in that**
a blocking facility (5) that is mobile in the longitudinal direction of the lance and is arranged appropriately on top part (1) or bottom part (2) of the lance such that a snap-in element (7) of the blocking facility (5) is arranged, at least in part, between at least one part of the elevation (8) and at least one part of the opening or groove (9) that extends in the longitudinal direction of the lance, and whereby the blocking facility (5) is arranged on the lance such as to be movable by gravity and, after connecting the top part to the bottom part in the operating position of the lance, shifts downward and prevents the coupling parts of the top part and bottom part from becoming detached.

2. Lance according to claim 1, **characterised in that** the two coupling parts (3; 4) plugged into each other are provided in the form of a bayonet closure.

3. Lance according to claim 1 or 2, **characterised in that** the coupling parts (3; 4) are essentially provided in the form of a hollow cylinder with an essentially circular cross-section.

4. Lance according to any one of the claims 1 to 3, **characterised in that** the blocking facility (5) is arranged on the top part (1) of the lance.

5. Lance according to any one of the claims 1 to 4, **characterised in that** the coupling part (4) arranged on the bottom part (2) of the lance is plugged into the coupling part (3) arranged on the top part (1) of the lance.

6. Lance according to any one of the claims 1 to 4, **characterised in that** an electrical coupling (12) is arranged in the plug-in coupling.

## Revendications

1. Lance pour la réception d'un capteur ou d'un échantillonneur pour la fusion de métaux avec une partie supérieure (1) et une partie inférieure (2) prévue pour être disposée sur le capteur ou l'échantillonneur, la partie supérieure (1) et la partie inférieure (2) étant reliées de façon amovible au moyen d'un coupleur enfichable, le coupleur enfichable présentant deux éléments de couplage (3;4) emboîtés l'un dans l'autre, dont un élément de couplage (3) est disposé sur la partie supérieure (1) et l'autre élément de couplage (4) sur la partie inférieure (2) de la lance, les deux éléments de couplage (3;4) étant emboîtés dans le sens longitudinal de la lance, l'un des deux éléments de couplage (3;4) présentant, à son extrémité de raccordement ouverte, une ouverture ou rainure (9) s'étendant dans le sens longitudinal de la lance depuis la face frontale de l'élément de couplage (3), présentant, espacée de la face frontale, un prolongement (14) formé dans le sens circonférentiel de l'élément de couplage (3), une élévation (8) entrant dans le prolongement (14), étant formée sur l'autre élément de couplage (4), **caractérisée par le fait que** un dispositif de blocage (5) mobile dans le sens longitudinal de la lance est disposé sur la partie supérieure (1) ou la partie inférieure (2) de la lance de telle manière à ce qu'un élément d'enclenchement (7) du dispositif de blocage (5) soit placé au moins partiellement entre au moins une partie de l'élévation (8) et au moins une partie de l'ouverture ou rainure (9) s'étendant dans le sens longitudinal de la lance, et le dispositif de blocage (5) étant disposé de façon mobile sur la lance du fait de la gravité et se déplaçant vers le bas après la liaison de la partie supérieure avec la partie inférieure en position de fonctionnement de la lance et empêchant que les éléments de couplage de la partie supérieure et de la partie inférieure puissent se détacher.

2. Lance conformément à la revendication n°1, **caractérisée par le fait que** les deux éléments de couplage (3;4) emboîtés l'un dans l'autre sont constituées sous forme de verrouillage par baïonnette.

3. Lance conformément à la revendication n°1 ou n°2, **caractérisée par le fait que** les éléments de couplage (3;4) sont essentiellement constitués comme cylindre creux avec section transversale essentiellement circulaire.

4. Lance conformément à l'une des revendications n°1 à n°3, **caractérisée par le fait que** le dispositif de blocage (5) est disposé sur la partie supérieure (1) de la lance.

5. Lance conformément à l'une des revendications n°1 à n°4, **caractérisée par le fait que** l'élément de couplage (4) disposé sur la partie inférieure (2) de la lance est inséré dans l'élément de couplage (3) disposé sur la partie supérieure (1) de la lance.

6. Lance conformément à l'une des revendications n°1 à n°4, **caractérisée par le fait qu'**un couplage électrique (12) est disposé dans le coupleur enfichable.
